(19) **Europäisches Patentamt / European Patent Office / Office européen des brevets**

(11) **EP 3 072 179 B1**

(12) **FASCICULE DE BREVET EUROPEEN**

(45) Date de publication et mention de la délivrance du brevet:
**07.11.2018 Bulletin 2018/45**

(21) Numéro de dépôt: **14809925.2**

(22) Date de dépôt: **14.11.2014**

(51) Int Cl.:
*H01M 10/48* (2006.01)       *H01M 10/42* (2006.01)
*H01M 6/50* (2006.01)        *G01N 27/30* (2006.01)
*H01M 10/052* (2010.01)

(86) Numéro de dépôt international:
**PCT/FR2014/052908**

(87) Numéro de publication internationale:
**WO 2015/075359 (28.05.2015 Gazette 2015/21)**

(54) **PROCEDE DE RECALIBRATION IN-SITU D'UNE ELECTRODE DE COMPARAISON INTEGREE AU SEIN D'UN SYSTEME ELECTROCHIMIQUE**

VERFAHREN ZUR REKALIBRIERUNG EINER IN EINEM ELEKTROCHEMISCHEN SYSTEM INTEGRIERTEN REFERENZELEKTRODE

PROCESS FOR IN-SITU RECALIBRATION OF A REFERENCE ELECTRODE INTEGRATED IN AN ELECTROCHEMICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2013 FR 1361465**

(43) Date de publication de la demande:
**28.09.2016 Bulletin 2016/39**

(73) Titulaire: **Renault S.A.S.**
**92100 Boulogne-Billancourt (FR)**

(72) Inventeurs:
- **GENIES, Sylvie**
  **F-38120 Saint Egreve (FR)**
- **ALIAS, Mélanie**
  **F-77167 Poligny (FR)**
- **LEIRENS, Sylvain**
  **F-38119 Pierre-Chatel (FR)**
- **KIRCHEV, Angel Zhivkov**
  **F-73100 Aix les Bains (FR)**

(74) Mandataire: **Rougemont, Bernard**
**Renault s.a.s**
**Technocentre**
**Sce 00267 TCR GRA 2 36**
**1, Avenue du Golf**
**78288 Guyancourt (FR)**

(56) Documents cités:
**US-A1- 2009 104 510      US-A1- 2009 294 306**
**US-A1- 2011 250 478      US-A1- 2013 009 604**

**Description**

L'invention a pour domaine technique les systèmes électrochimiques, en particulier les systèmes électrochimiques dits à trois électrodes, contenant une électrode de comparaison.

Un système électrochimique est constitué à minima d'une électrode de travail et d'une contre-électrode immergées dans un électrolyte et séparées par un séparateur. On peut ajouter une troisième électrode dont le potentiel est stable et connu à de tels systèmes, ce qui permet de mesurer indépendamment le potentiel de chaque électrode lors des réactions d'oxydo-réduction. Cette troisième électrode est considérée comme une électrode de référence (EDR) si son potentiel électrochimique, donné par l'équation de Nernst (cf Eq. 2), est invariant dans le temps. Cette stabilité est possible si les activités des espèces du couple électrochimique présent $Ox_{Ref}/Red_{Ref}$ ne varient pas dans le temps.

La réaction électrochimique permettant de passer de l'espèce oxydante à l'espèce réductrice, et réciproquement, est caractérisée par l'équation suivante :

$$c\ Ox_{Ref} + n\ e^- \rightleftharpoons d\ Red_{Ref} \qquad (Eq.\ 1)$$

Le potentiel associé à cette réaction est donné par l'équation suivante:

$$E = E^0 + \frac{RT}{nF} \ln \frac{a_{Ox_{Ref}}{}^c}{a_{Red_{Ref}}{}^d} \qquad (Eq.\ 2)$$

Avec E : Potentiel électrochimique (V)

E° : Potentiel électrochimique standard (V), c'est-à-dire mesuré dans les conditions standard de pression et de température

R : Constante de gaz parfait (8,314 $J.K^{-1}.mol^{-1}$)

T : Température (K)

n : Nombre d'électrons ($e^-$) échangés

c,d : Coefficients stoechiométriques de la réaction électrochimique

F : Nombre de Faraday (96485 $C.mol^{-1}$)

$a_{OxRef}$ : Coefficient d'activité de l'espèce oxydante du couple électrochimique

$a_{RedRer}$ : Coefficient d'activités de l'espèce réductrice du couple électrochimique.

La troisième électrode peut également être une électrode de comparaison (EDC). Dans ce cas, son potentiel électrochimique n'est pas parfaitement stable. Il peut légèrement varier au cours du temps du fait de l'évolution d'une des activités des espèces du couple électrochimique présent $Ox_{Ref}/Red_{Ref}$, modifiant ainsi l'équilibre de la réaction d'oxydo-réduction. Toutefois, cette évolution est très lente. Si l'utilisation de cette électrode se fait dans un laps de temps suffisamment court par rapport à la vitesse à laquelle son potentiel dérive, l'électrode peut être considérée comme une électrode de référence. Si son utilisation est prolongée au-delà, la dérive de son potentiel doit être considérée.

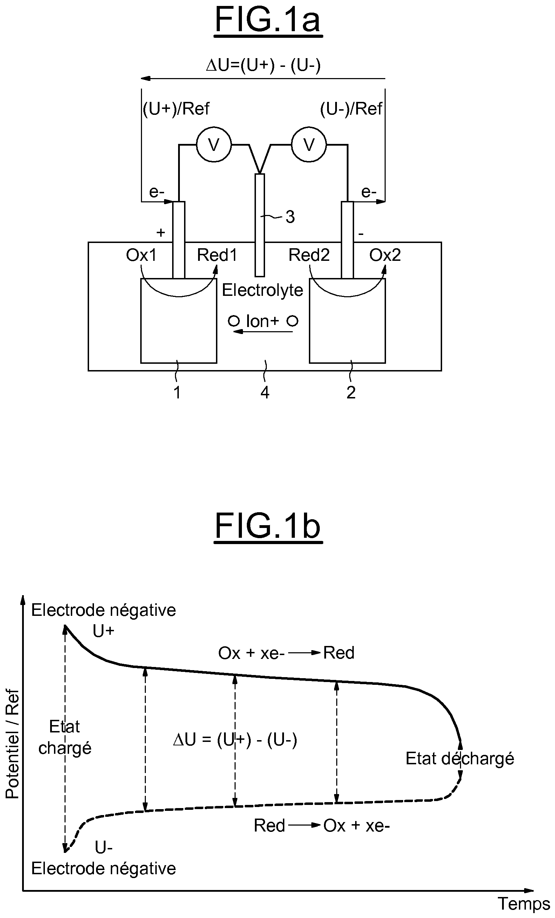

La figure 1 illustre un accumulateur constitué d'une électrode positive (Electrode de travail) et d'une électrode négative (Contre-électrode). L'intégration d'une EDR ou d'une EDC au sein d'un accumulateur permet de caractériser le profil en potentiel de chaque électrode au cours des processus de charge et de décharge et de caractériser leurs propriétés électrochimiques en fonction de l'état de charge et de l'état de vieillissement de l'accumulateur.

Ces propriétés électrochimiques peuvent être obtenues par des sollicitations diverses en courant ou en potentiel (variation fréquentielle, variation temporelle). On peut citer la résistance interne, la résistance interfaciale, la résistance de transfert de charge, des fréquences caractéristiques, le coefficient de diffusion. On peut obtenir, par exemple, un spectre d'impédance par une perturbation fréquentielle de la tension (ou du courant) pour une électrode composite. A partir de l'analyse de tels spectres, des paramètres peuvent être calculées pour des fréquences particulières, et leurs évolutions corrélées avec un état de santé en termes de puissance par exemple.

Un accumulateur est un système électrochimique comprenant une électrode de travail et une contre électrode baignant dans un électrolyte. La figure 1a illustre un tel système. Certains accumulateurs comprennent une électrode de comparaison. Il sera fait référence ci-après à des accumulateurs de type lithium-ion.

L'électrode de comparaison est conçue afin que le couple électrochimique choisi présente un plateau de potentiel sur une gamme d'états de charge étendue et soit stable dans l'électrolyte. L'espèce réduite dont le potentiel est le plus réducteur doit se trouver dans la fenêtre de stabilité en potentiel de l'électrolyte. Aujourd'hui, différents couples d'oxydo-réduction sont utilisés pour servir d'électrodes de comparaison dans les systèmes électrochimiques de type lithium-ion :

Pour ces matériaux, la loi de Nernst présentée plus haut peut être reformulée en fonction du taux d'insertion x du lithium dans l'électrode de comparaison de la façon suivante :

$$E = E^0 + \frac{RT}{nF} \ln \frac{(1-x)}{x} \qquad (Eq. 3)$$

avec x : taux d'insertion variant de la façon suivante: $0 < x < 1$

La concentration d'un des composants peut varier au cours du temps à cause de la modification de la concentration en ions $Li^+$ dans l'électrolyte pour le couple $Li^+/Li$, ou à cause de la variation du taux d'insertion x dans la structure d'insertion par autodécharge. Cela implique que ces électrodes sont des électrodes de comparaison.

A un niveau fondamental, l'EDR permet d'améliorer la compréhension des phénomènes électrochimiques qui ont lieu aux électrodes. Comme le montre la figure 1b, la mesure de tension aux bornes de l'élément est une simple différence des potentiels de chacune des deux électrodes. C'est donc une mesure relative qui ne représente pas le potentiel de chacune des deux électrodes. Cette valeur de potentiel de l'électrode que l'on pourrait qualifier d'absolue ne peut être obtenue qu'en mesurant la tension par rapport à un potentiel fixe. Un tel potentiel fixe est donné par l'EDR. On peut ainsi détecter l'apparition d'une dérive de potentiel vers des zones de surcharge ou de surdécharge, ou bien encore détecter des réactions secondaires en marge des réactions électrochimiques principales.

A un niveau applicatif, l'EDR permet de mesurer le potentiel de corrosion d'un métal et de détecter le seuil de potentiel en fin de charge ou de décharge au niveau des électrodes en complément du seuil de tension du système électrochimique comme proposé dans l'état de la technique.

L'EDR permet également de réaliser un indicateur d'état de santé par le suivi d'un paramètre électrique représentatif tel que la résistance interne, la résistance de surface ou une combinaison de plusieurs de ces paramètres.

Dans le premier cas, l'utilisation de l'électrode de comparaison est le plus souvent limitée dans le temps. La dérive du potentiel peut être considérée comme insignifiante, ce qui mène à l'utilisation du terme d'EDR en lieu et place du terme d'EDC.

Dans le second cas, et plus particulièrement lors de l'utilisation d'une EDC en tant que capteur d'évaluation de l'état de fonctionnement d'un accumulateur, l'EDC doit fournir une information fiable pendant toute la durée de vie de l'accumulateur. Cela n'est pas possible dès lors que la dérive de son potentiel fausse la mesure.

De l'état de la technique, on connait les documents suivants.

Le document US 2009/0104510 A1 divulgue l'utilisation d'une EDR pour la mesure des états de charge et de santé pour des batteries lithium-ion. Le type de l'EDR proposée est un matériau de type biphasique afin de disposer d'un plateau de tension stable quel que soit l'état de lithiation du couple électrochimique considéré de l'EDR. Le couple mis en avant dans ce brevet est le titanate de lithium $Li_4Ti_5O_{12}/Li_7Ti_5O_{12}$. Une liste non exhaustive donnée dans le brevet cite d'autres couples en particulier les alliages lithiés et les phosphates de lithium.

Le document JP2010218900 protège l'utilisation d'une EDR pour protéger l'accumulateur des surcharges en contrôlant le potentiel de l'électrode négative.

Cependant, les électrodes à base de matériau enduit, par exemple en LTO (titanates de lithium) ou en LFP (lithium fer phosphate) ou les alliages vieillissent au cours du temps, de façon accélérée avec la température ce qui amène à une dérive de la mesure de tension plus au moins rapide.

Du fait de cette dérive, la mesure des potentiels en cours du temps de l'électrode positive et négative sera fausse, et l'exploitation extraite de ces mesures conduira à faire fonctionner l'accumulateur dans une plage de tension incorrecte dégradante pour l'élément (surcharge, surdécharge) et possiblement dangereuse (surcharge).

Le problème de la dérive de potentiel de l'électrode de comparaison se pose dans les systèmes électrochimiques au lithium, comme cela a été expliqué ci-dessus. Toutefois, des dérives similaires peuvent être observées dans des systèmes électrochimiques n'impliquant pas le lithium.

Le document US 2009/104510 divulgue des électrodes de référence présentant une durée de vie accrue pour une utilisation dans des capteurs ampérométriques à long terme comprenant une électrode de travail, une contre électrode et une électrode de référence. Le document divulgue la comparaison du potentiel de l'électrode de référence à son potentiel de plateau et sa régénération insitu par application d'un potentiel électrique sur une durée de régénération appropriée au potentiel actuel de l'électrode de référence et/ou de façon répétée sur une durée plus longue que la durée de régénération.

Il existe donc un besoin pour un procédé et un système électrochimique permettant de recalibrer in-situ une électrode de comparaison présentant une dérive non acceptable (excessive ou trop rapide).

Il existe également un besoin pour un procédé et un système électrochimique permettant d'évaluer l'état de santé d'une électrode de comparaison.

Un objet de l'invention est un procédé de recalibration in-situ d'une électrode de comparaison intégrée au sein d'un système électrochimique comprenant une électrode de travail, une contre électrode et un électrolyte. Le procédé comprend les étapes suivantes :

on vérifie in-situ le potentiel de l'électrode de comparaison par rapport à l'électrode de travail ou à la contre-électrode,
on détecte s'il existe une dérive du potentiel de l'électrode de comparaison par rapport au plateau de potentiel pour lequel elle a été fonctionnalisée ou conçue, et,
si tel est le cas, on recalibre in-situ l'électrode de comparaison, et, pour vérifier in-situ le potentiel de l'électrode de comparaison par rapport à l'électrode de travail ou à la contre-électrode, on applique les étapes suivantes :

on mesure le potentiel de l'électrode de comparaison, , puis
on applique un courant de vérification d'amplitude positive pendant une première durée, puis
on mesure une première variation de potentiel de l'électrode de comparaison, puis
on applique un courant de vérification d'amplitude négative pendant une seconde durée, puis
on mesure une deuxième variation de potentiel de l'électrode de comparaison, puis
on détermine une mesure de tension en fonction de la première variation et de la deuxième variation de potentiel.

On notera que l'on peut vérifier le potentiel de l'électrode de comparaison par rapport à l'électrode positive ou négative pleinement insérée ou désinsérée par l'espèce chimique de l'élément ionique contenu dans l'électrolyte.

Le produit de l'amplitude des courants de vérification par la première durée peut être au moins égal au dixième de la charge maximale de l'électrode de comparaison.

On peut déterminer qu'il existe une dérive du potentiel de l'électrode de comparaison si la tension mesurée est supérieure à la tension de plateau augmentée d'une valeur de tension de décalage, pour une température donnée, de préférence au moins égale à 20mV $\pm$5mV.

On peut vérifier le potentiel de l'électrode de comparaison et on détecte la dérive du potentiel de l'électrode de comparaison de façon périodique, notamment en fonction d'une période de temps écoulée depuis la dernière fonctionnalisation.

On peut vérifier le potentiel de l'électrode de comparaison pendant une période de relaxation du système électrochimique consécutive à une recharge complète.

Si une dérive de potentiel est constatée, on peut recalibrer l'électrode de comparaison en réalisant les étapes suivantes :

on applique un courant de recalibration d'amplitude négative jusqu'à une première variation de potentiel, puis
on mémorise la valeur de potentiel obtenue en tant que borne inférieure, puis
on applique un courant de recalibration d'amplitude positive, jusqu'à une deuxième variation de potentiel, puis
on mémorise la valeur de potentiel obtenue en tant que borne supérieure, puis
on détermine ensuite la capacité de l'électrode de comparaison en fonction de la borne inférieure de potentiel, de la borne supérieure de potentiel et du courant appliqué, puis
on détermine l'état de vieillissement de l'électrode de comparaison par rapport à sa capacité initiale et à la capacité déterminée,
si l'état de vieillissement est supérieur à un seuil, on applique un courant négatif afin d'obtenir un état de charge, et si tel n'est pas le cas, on déclare l'électrode de comparaison défaillante.

Selon l'invention, on recalibre l'électrode de comparaison en appliquant successivement une courant de recalibration d'amplitude positive puis un courant de recalibration d'amplitude négative pour repositionner le potentiel de l'électrode de comparaison sur le plateau de potentiel.

Le produit de l'amplitude des courants de recalibration par la durée d'application des courants de recalibration peut être supérieur au cinquième de la charge totale de l'électrode de comparaison.

D'autres buts, caractéristiques et avantages apparaîtront à la lecture de la description suivante donnée uniquement en tant qu'exemple non limitatif et faite en référence aux dessins annexés sur lesquels :

-    les figures 1a et 1b illustrent un système électrochimique à électrode de comparaison selon l'état de la technique,
-    la figure 2 illustre la connexion des électrodes d'un système électrochimique préalablement à un recalibration,
-    la figure 3 illustre la courbe de potentiel de l'électrode de comparaison par rapport à la contre électrode 2 en fonction de la capacité du système électrochimique,
-    la figure 4 illustre les profils en potentiel d'une électrode positive en oxyde de nickel manganèse cobalt lithié $LiNi_xMn_yCo_zO_2$ (NMC) intégrée dans un élément lithium-ion Graphite/NMC et cyclé à 45°C,
-    la figure 5 illustre les profils en potentiel d'une électrode positive en oxyde de nickel manganèse cobalt lithié $LiNi_xMn_yCo_zO_2$ (NMC) intégrée dans un élément lithium-ion Graphite/NMC et cyclé à 25°C, et

- la figure 6 illustre les principales étapes du procédé de recalibration in-situ de l'électrode de comparaison selon l'invention.

La figure la illustre un système électrochimique comprenant une électrode de travail 1, une contre électrode 2 et une électrode de comparaison 3 baignant toutes trois dans un électrolyte 4. L'électrolyte 4 peut être liquide ou solide. La tension ΔU disponible lors de la décharge dépend de la différence des potentiels U+ et U- aux bornes de l'électrode de travail et de la contre électrode. On peut également voir que les potentiels U+ et U- aux bornes de l'électrode de travail et de la contre électrode sont mesurés par rapport à l'électrode de comparaison 3. La figure 1b illustre quant à elle l'évolution des potentiels de l'électrode de travail et de la contre électrode en fonction de l'état chargé et déchargé de l'accumulateur, et, incidemment, de l'état oxydé ou réduit de ces électrodes.

Il va être maintenant décrit un mode de réalisation de l'invention concernant une méthode de recalibration in-situ d'une électrode de comparaison (EDC) intégrée au sein d'un système électrochimique. La technologie concernée est plus particulièrement la technologie lithium-ion. Cette technologie, de par la réactivité des composants vis-à-vis de l'humidité de l'air, oblige à concevoir des enveloppes étanches. L'intégration d'une EDC se fait au moment de la fabrication de l'élément ce qui empêche un remplacement ultérieur de l'EDC. Les durées de vie attendues pour un accumulateur lithium-ion sont de l'ordre de 10 à 15 ans pour des applications qui seront évolutives en fonction de l'évolution au cours du temps des caractéristiques en puissance ou en énergie de l'accumulateur.

Sur une telle durée de vie, le potentiel électrochimique d'une EDC va s'écarter progressivement de son potentiel de plateau et dériver, comme cela a été expliqué plus haut.

La dérive du potentiel de l'électrode de comparaison a des causes multiples, telles que l'autodécharge, la présence d'un micro-courant entre l'EDC et les électrodes de la cellule électrochimique par l'intermédiaire de l'instrument de mesure ou le vieillissement calendaire. Pour limiter le vieillissement calendaire, il est possible et même important d'ajuster l'état de charge initial au moment de la fonctionnalisation de l'EDC (par exemple pour une électrode en LTO). En effet, l'état de charge influe sur le vieillissement, qui peut alors être fortement réduit en choisissant l'état de charge le plus adapté.

Malgré ces précautions et en raison des autres facteurs influents, le potentiel de l'électrode de comparaison subit une dérive au cours du temps et fournit par conséquent des valeurs erronées du potentiel des électrodes positives et négatives. L'information fournie n'est alors plus exploitable.

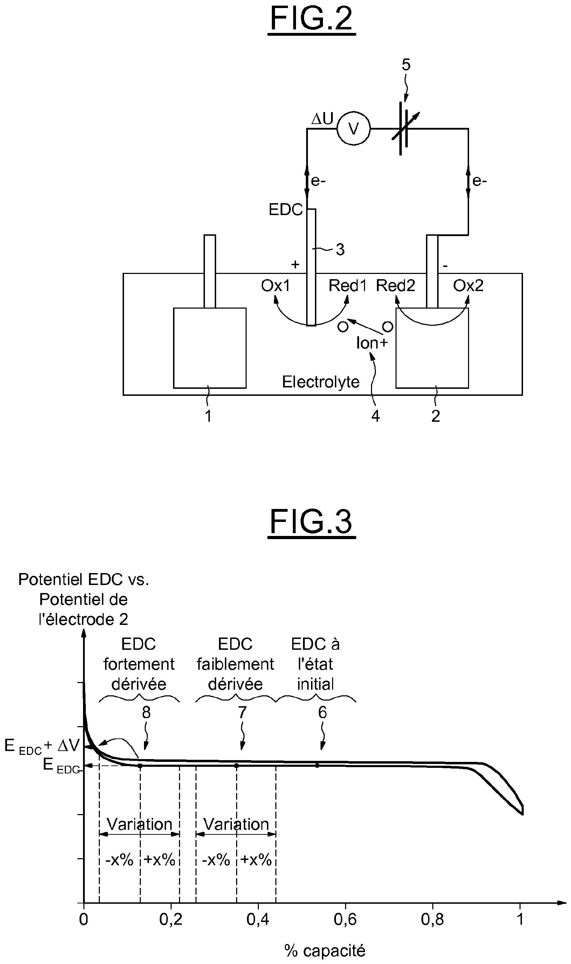

Il est possible de corriger la dérive de l'électrode de comparaison en procédant à une recalibration grâce à l'utilisation d'une des deux électrodes positive ou négative de la cellule électrochimique. On utilise de préférence celle pour laquelle la capacité est en excès par rapport à l'autre. La refonctionnalisation de l'électrode de comparaison ne consomme qu'une infime part de la capacité de l'électrode utilisée car le matériau actif de l'électrode de comparaison représente une capacité infime par rapport à la capacité des électrodes de la cellule électrochimique. Un exemple de raccordement avant recalibration est donné dans la figure 2. Sur cette figure, on peut voir que l'électrode de comparaison 3 et la contre électrode 2 sont reliées par l'intermédiaire d'une source de tension variable 5.

En d'autres termes, le procédé de recalibration (ou refonctionnalisation) de l'électrode de comparaison permet de la replacer dans un domaine de potentiel stable, lui permettant ainsi d'être requalifiée d'électrode de référence in-situ. Comme cela a été présenté plus haut, un accumulateur lithium-ion est étanche, l'EDC étant intégrée au moment de la fabrication, il n'est donc pas possible de procéder à une recalibration ex-situ sans endommager l'accumulateur. On doit donc procéder à une recalibration in-situ.

Plusieurs méthodes peuvent être appliquées pour détecter la dérive du potentiel de l'électrode de comparaison :

- Refonctionnalisation périodique (en fonction du temps par exemple)
- Refonctionnalisation après détection d'une évolution anormale du potentiel de l'électrode positive et négative lors des périodes de relaxation après recharge complète
- Refonctionnalisation après vérification que le potentiel de l'EDC se trouve hors du plateau de tension

La figure 3 illustre ce dernier cas. L'état de charge de l'EDC est matérialisé par le point référencé 6 sur la courbe de potentiel de l'électrode de comparaison par rapport à la contre électrode 2 en fonction de la capacité du système électrochimique. Comme on peut le voir, cet état de charge peut évoluer au cours de la décharge du système bien que le potentiel de l'EDC demeure sur le plateau de potentiel. Or, suivant l'état de charge du système électrochimique, l'état de charge (acronyme anglais SOC pour « State of Charge ») de l'EDC peut se trouver proche de l'état initial, matérialisé par le point référencé 7, ou alors à une des extrémités du plateau, matérialisé par le point référencé 8. On considère que l'EDC est à refonctionnaliser lorsque son état de charge se situe au niveau du point 8. Pour vérifier si l'EDC se trouve dans une telle situation, on fait subir à l'EDC une sollicitation pendant un temps t sous un courant d'amplitude équivalente à un régime supérieur à C/10 et inférieur ou égal à C, successivement positif puis négatif. Cette sollicitation induit une faible variation de son état de charge, ce qui génère une variation de potentiel de l'électrode de comparaison. En mesurant cette variation de potentiel, on peut déterminer l'état de l'électrode de comparaison. On rappelle également que l'état de lithiation de l'électrode de comparaison est relié à son potentiel par l'équation de Nernst décrite plus haut (Eq. 3). Ainsi, le potentiel de l'électrode variera selon qu'elle ne comprend pas d'ions lithium insérés (état pleinement délithié) ou qu'elle comprend la quantité maximale d'ions lithium insérés (état pleinement lithié).

Le potentiel de l'électrode de comparaison évolue donc :

- sans variation significative, sur le plateau de tension, si l'état de charge se trouve dans la zone de plateau (Ref. 7), ou
- de façon significative si l'état de charge se trouve à l'extrémité du plateau de tension (Ref. 8,), à l'état délithié.

On peut considérer que le potentiel de la contre électrode 2 (électrode négative de l'élément pour le cas présenté) est invariant car la charge (en A.h) utilisée lors du cycle de charge et décharge est très faible. La charge utilisée n'est pas suffisante pour faire varier de façon significative l'état de charge du système électrochimique et donc les potentiels des différentes électrodes. Une dérive de potentiel constatée est ainsi bien liée à une dérive du potentiel de l'électrode de comparaison en dehors du plateau de potentiel.

Il est important de déterminer la valeur maximale de la dérive en potentiel acceptable par rapport au potentiel de plateau mesuré pendant la sollicitation sous courant à une température donnée et pendant une durée significative, permettant de lisser les variations de charge, par exemple 1h. On considère que le processus de refonctionnalisation est déclenché si la condition suivante est vérifiée :

$$\left|U_{mesurée}\left(T, I = C/10\right)\right| > \left|U_{plateau}\left(T, I = C/10\right)\right| + 20\,mV \quad (Eq.4)$$

Avec :

$U_{mesurée}$ : Tension mesurée
$U_{plateau}$ : Tension de plateau
T : Température du système
I : Courant employé
C : Capacité nominale de l'EDC

Dès lors qu'une dérive du potentiel de l'électrode de comparaison supérieure à la valeur de seuil, ici par exemple 20mV, est constatée, la refonctionnalisation peut se faire.

Une difficulté réside alors dans la détermination des bornes de tension haute et basse sachant que l'électrode 2 est dans un état de charge variable et non maitrisé au moment de la procédure de refonctionnalisation. La tension mesurée de l'EDC par rapport à l'électrode 2 est fonction de la tension de l'électrode 2.

Plusieurs méthodes peuvent être appliquées.

Au cours d'une première méthode, on applique un courant négatif -I, (choisi selon la nature de l'EDC pour un régime >C/5) de façon à lithier le matériau de l'électrode de comparaison jusqu'à une variation de potentiel signifiant que l'électrode est pleinement lithiée. On mémorise cette valeur comme la borne inférieure (B-).

On applique ensuite un courant positif +I, présentant en valeur absolue la même amplitude que le courant négatif. L'application de ce courant permet de délithier le matériau de l'électrode de comparaison jusqu'à une variation de potentiel signifiant que l'électrode est pleinement délithiée. On mémorise cette valeur comme borne supérieure (B+).

On détermine ensuite la capacité réelle de l'EDC, et son état de vieillissement par rapport à sa capacité initiale. La capacité réelle de l'EDC est déterminée par l'intégration du courant I par le temps au cours duquel le potentiel a varié de (B-) à (B+) :

$$Capacité\ réelle = \int_0^t I(t)dt \qquad (Eq.\ 5)$$

Considérant que le courant I appliqué conduisant à la variation du potentiel entre (B-) et (B+) est constant, on peut écrire :

$$Capacité\ réelle = I \cdot t \qquad (Eq.\ 6)$$

La capacité initiale est mesurée suivant le même protocole lors de la première fonctionnalisation, considérée comme l'état initial. L'état de vieillissement, exprimé en pourcents, est donné par :

$$\text{Etat de vieillissement} = \frac{\text{Capacité réelle}}{\text{Capacité initiale}} \times 100 \qquad (Eq.~7)$$

On applique enfin un courant négatif afin de lithier l'EDC jusqu'à l'état de charge souhaité. Le courant peut être appliqué afin d'atteindre une charge en A.h. La quantité d'électricité A.h est déterminé en fonction de l'état de charge souhaité, des bornes (B+) et (B-) et des courants +I et -I.

Si le courant est connu, on détermine la durée d'application afin d'arriver à la même charge en A.h.

Au cours d'une deuxième méthode, on applique successivement une variation de courant positif puis négatif pour repositionner le potentiel de l'EDC sur le plateau. Cette méthode ne permet toutefois pas de fixer avec précision l'état de charge de l'EDC.

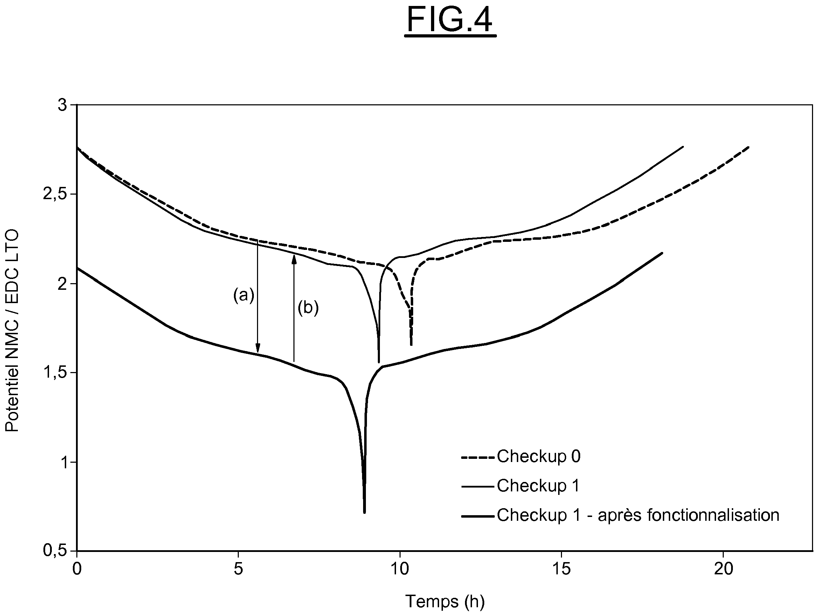

La figure 4 présente les profils en potentiel d'une électrode positive en oxyde de nickel manganèse lithié $LiNi_xMn_yCo_zO_2$ (NMC) intégrée dans un élément lithium-ion Graphite/NMC et cyclé à 45°C.

La figure 4 montre deux profils de potentiel de l'électrode avant cyclage (Checkup 0) et après 100 cycles (Checkup 1) sans fonctionnalisation. On peut constater un décalage du potentiel de l'électrode en NMC entre le Chekup 0 et le Checkup 1. Ce décalage n'est pas lié à une dégradation des propriétés électriques de l'électrode (augmentation de sa résistance interne) mais à une dérive du potentiel de l'EDC LTO (ou EDR LTO) prise en référence. Cette dérive a été supprimée par la refonctionnalisation de l'EDR en appliquant la première méthode de recalibration décrite plus haut. Le résultat de cette recalibration est visible dans la figure 4 à travers le profil de potentiel (Checkup 1 - apres refonctionnalisation). Ce profil de potentiel de l'électrode en NMC après fonctionnalisation est bien dans le même domaine de potentiel que lors du check-up 0.

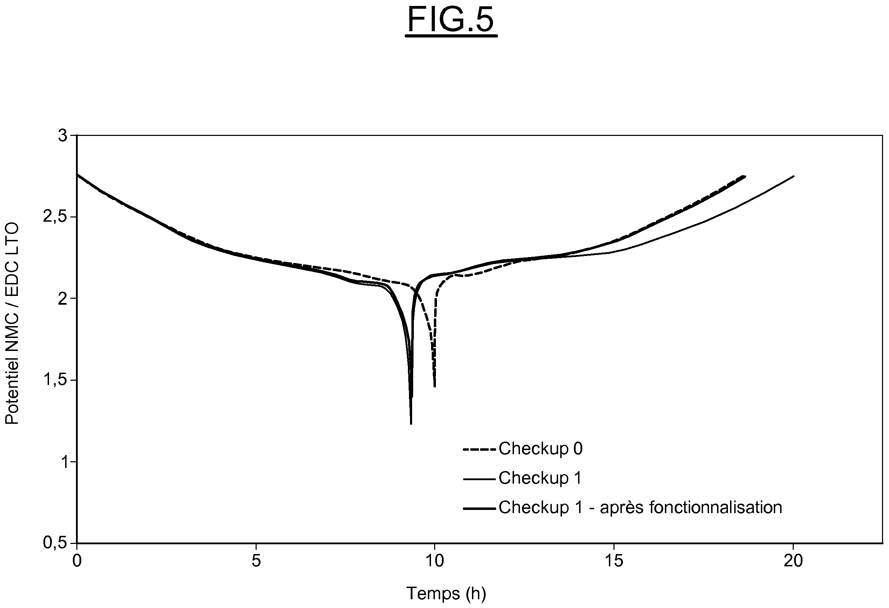

Cette dérive est liée à un phénomène d'autodécharge thermiquement accélérée par l'essai de cyclage de l'élément effectué à 45°C. Un essai similaire réalisé à 25°C est illustré par la figure 5. On peut voir que la dérive est moins importante dans de telles conditions, toutes les autres conditions d'essai étant par ailleurs équivalentes.

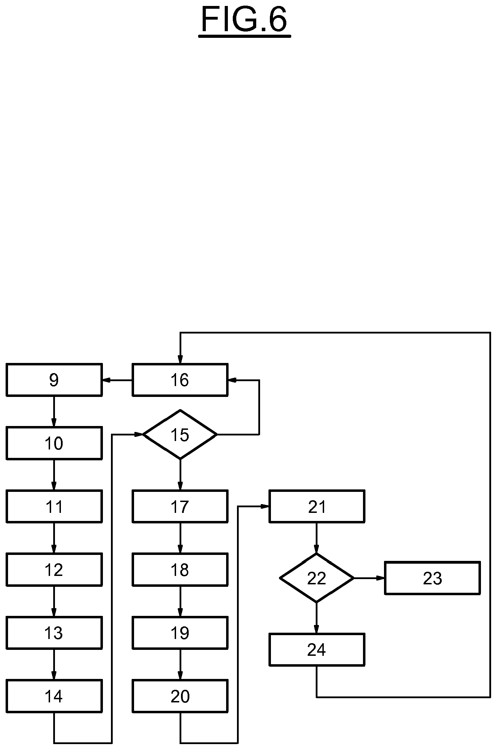

La figure 6 illustre les principales étapes d'un procédé de recalibration in-situ de l'électrode de comparaison.

Le procédé comprend une étape 9 au cours de laquelle on détermine si le système électrochimique est dans une phase de relaxation c'est-à-dire sans qu'un courant positif (entrant) ou négatif (sortant) ne soit appliqué après une charge complète. Cet état de relaxation est confirmé par une simple mesure du courant qui doit être nul

Si tel est le cas, le procédé se poursuit à l'étape 10 au cours de laquelle on modifie les connexions des électrodes de sorte que l'électrode de comparaison soit reliée à l'électrode de travail ou à la contre électrode du système électrochimique afin de pouvoir faire circuler un courant.

Au cours d'une étape 11, on applique un courant de vérification d'amplitude positive pendant une première durée.

Au cours d'une étape 12, on mesure la variation du potentiel de l'électrode de comparaison par rapport à l'autre électrode à laquelle elle est connectée. Pour cela, on réalise la soustraction entre le potentiel de l'électrode de comparaison par rapport à l'autre électrode avant l'application du courant positif et le même potentiel après l'application du courant positif.

Au cours d'une étape 13, on applique un courant de vérification d'amplitude négative pendant une seconde durée. La seconde durée peut être égale à la première durée.

Le produit de l'amplitude des courants de vérification par les durées respectives est au moins égal au dixième de la charge maximale de l'électrode de comparaison.

Au cours d'une étape 14, on mesure la variation du potentiel de l'électrode de comparaison par rapport à l'autre électrode à laquelle elle est connectée. Pour cela, on réalise la soustraction entre le potentiel de l'électrode de comparaison par rapport à l'autre électrode avant l'application du courant négatif et le même potentiel après l'application du courant négatif.

Au cours d'une étape 15, on détermine que la valeur absolue de la différence entre le potentiel de l'électrode de comparaison par rapport à l'autre électrode avant l'application d'un courant et le même potentiel après l'application du courant est inférieur à un seuil de tension, par exemple à partir de 20mV ±5mV.

Si tel est le cas, le procédé se termine à une étape 16 au cours de laquelle on reconnecte l'électrode de travail, l'électrode de comparaison et la contre électrode de sorte que le système électrochimique puisse être employé en charge et décharge.

Si tel n'est pas le cas, le procédé se poursuit par une étape 17 au cours de laquelle on applique un courant de recalibration d'amplitude négative jusqu'à détection d'une variation de potentiel supérieur à un premier seuil négatif (en mV/min).

Au cours d'une étape 18, on mémorise alors le potentiel obtenu en tant que borne inférieure de tension.

Au cours d'une étape 19, on applique un courant de recalibration d'amplitude positive jusqu'à détection d'une variation de potentiel supérieur à un deuxième seuil positif (en mV/min).

Au cours d'une étape 20, on mémorise alors le potentiel obtenu en tant que borne supérieure de tension.

Le produit de l'amplitude des courants de recalibration par la durée d'application des courants de recalibration est supérieur au cinquième de la charge totale de l'électrode de comparaison.

Au cours d'une étape 21, on détermine la capacité de l'électrode de comparaison en fonction de la borne inférieure de potentiel, de la borne supérieure de potentiel et du courant appliqué puis on détermine l'état de vieillissement de l'électrode de comparaison par rapport à sa capacité initiale et à la capacité déterminée.

Au cours d'une étape 22, on détermine si l'état de vieillissement est supérieur à un seuil. Si tel est le cas, le procédé se termine à l'étape 23 au cours de laquelle on déclare l'électrode de comparaison non fonctionnelle.

Si tel n'est pas le cas, le procédé se poursuit à l'étape 24, au cours de laquelle on applique un courant négatif jusqu'à la valeur d'état de charge souhaité de l'électrode de comparaison. Le procédé se termine alors par l'étape 16 décrite ci-dessus.

Le procédé de recalibration in-situ d'une électrode de comparaison permet ainsi de rétablir le potentiel initial de l'électrode de comparaison afin de rétablir la fiabilité du système électrochimique, et ce, surtout pour des systèmes scellés dans lesquels un démontage de l'électrode de comparaison n'est pas possible. Le procédé permet ainsi de prolonger la durée de vie de tels systèmes et de déterminer les systèmes électrochimiques pour lesquels l'électrode de comparaison est défectueuse.

## Revendications

1. Procédé de recalibration in-situ d'une électrode de comparaison (3) intégrée au sein d'un système électrochimique comprenant une électrode de travail (1), une contre-électrode (2) et un électrolyte (4), **caractérisé par le fait qu'**il comprend les étapes suivantes :

   on vérifie in-situ le potentiel de l'électrode de comparaison (3) par rapport à l'électrode de travail (1) ou à la contre-électrode (2) en appliquant les étapes suivantes :

   on mesure le potentiel de l'électrode de comparaison (3), puis
   on applique un courant de vérification d'amplitude positive pendant une première durée, puis
   on mesure une première variation de potentiel de l'électrode de comparaison (3), puis
   on applique un courant de vérification d'amplitude négative pendant une seconde durée, puis
   on mesure une deuxième variation de potentiel de l'électrode de comparaison (3), puis
   on détermine une mesure de tension en fonction de la première variation et de la deuxième variation de potentiel, puis
   on détermine qu'il existe une dérive du potentiel de l'électrode de comparaison (3) par rapport au plateau de potentiel pour lequel elle a été fonctionnalisée ou conçue si la tension mesurée est supérieure à la tension de plateau augmentée d'une valeur de tension de décalage, pour une température donnée, et,
   si tel est le cas, on recalibre in-situ l'électrode de comparaison (3) en appliquant successivement un courant de recalibration d'amplitude positive puis un courant de recalibration d'amplitude négative pour repositionner le potentiel de l'électrode de comparaison (3) sur le plateau de potentiel.

2. Procédé selon la revendication 1, dans lequel le produit de l'amplitude des courants de vérification par les durées respectives est au moins égal au dixième de la charge maximale de l'électrode de comparaison (3) et au plus égal à la charge maximale de l'électrode de comparaison (3).

3. Procédé selon l'une quelconque des revendications précédentes, dans lequel la valeur de tension de décalage est au moins égale à 20mV $\pm$5mV.

4. Procédé selon l'une des revendications précédentes, dans lequel on vérifie le potentiel de l'électrode de comparaison (3) et on détecte la dérive du potentiel de l'électrode de comparaison (3) de façon périodique, notamment en fonction d'une période de temps écoulée depuis la dernière fonctionnalisation.

5. Procédé selon l'une des revendications précédentes, dans lequel on vérifie le potentiel de l'électrode de comparaison (3) pendant une période de relaxation du système électrochimique consécutive à une recharge complète.

6. Procédé selon l'une des revendications précédentes, dans lequel on recalibre l'électrode de comparaison (3) en réalisant les étapes suivantes :

   on applique un courant de recalibration d'amplitude négative jusqu'à une première variation de potentiel, puis
   on mémorise la valeur de potentiel obtenue en tant que borne inférieure, puis
   on applique un courant de recalibration d'amplitude positive, jusqu'à une deuxième variation de potentiel, puis

on mémorise la valeur de potentiel obtenue en tant que borne supérieure, puis

on détermine ensuite la capacité de l'électrode de comparaison (3) en fonction de la borne inférieure de potentiel, de la borne supérieure de potentiel et du courant appliqué, puis

on détermine l'état de vieillissement de l'électrode de comparaison (3) par rapport à sa capacité initiale et à la capacité déterminée,

si l'état de vieillissement est inférieur à un seuil, on applique un courant négatif afin d'obtenir un état de charge, et si tel n'est pas le cas, on déclare l'électrode de comparaison (3) défaillante.

7. Procédé selon la revendication 6, dans lequel le produit de l'amplitude des courants de recalibration par la durée d'application des courants de recalibration est supérieur au cinquième de la charge totale de l'électrode de comparaison (3).


**Patentansprüche**

1. Verfahren zur Rekalibrierung in situ einer Referenzelektrode (3), die in einem elektrochemischen System integriert ist, umfassend eine Arbeitselektrode (1), eine Gegenelektrode (2) und ein Elektrolyt (4), **dadurch gekennzeichnet, dass** es die folgenden Schritte umfasst:

   Überprüfung in situ des Potentials der Referenzelektrode (3) im Vergleich mit der Arbeitselektrode (1) oder der Gegenelektrode (2), wobei die folgenden Schritte angewandt werden:

   Messen des Potentials der Referenzelektrode (3), dann
   Anlegen eines Prüfstroms mit positiver Amplitude während einer ersten Dauer, dann
   Messen einer ersten Potentialänderung der Referenzelektrode (3), dann
   Anlegen eines Prüfstroms mit negativer Elektrode während einer während einer zweiten Dauer, dann
   Messen einer zweiten Potentialänderung der Referenzelektrode (3), dann
   Bestimmen eines Spannungsmaßes in Abhängigkeit von der ersten Variation und der zweiten Variation des Potentials, dann
   Bestimmen, ob eine Drift des Potentials der Referenzelektrode (3) in Bezug zum Potentialplateau, für das sie funktionalisiert und entworfen wurde, vorhanden ist, wenn die gemessene Spannung größer als die Plateauspannung, erhöht um einen Offsetspannungswert bei einer gegebenen Temperatur ist, und
   wenn dies der Fall ist, Rekalibrierung in situ der Referenzelektrode (3), wobei nacheinander ein Rekalibrierungsstrom mit positiver Amplitude, dann ein Rekalibrierungsstrom mit negativer Amplitude angelegt wird, um das Potential der Referenzelektrode (3) wieder auf dem Potentialplateau zu positionieren.

2. Verfahren nach Anspruch 1, bei dem das Produkt der Amplitude der Prüfströme mal die jeweiligen Dauern mindestens gleich dem Zehntel der Maximallast der Referenzelektrode (3) und höchstens gleich der Maximallaste der Referenzelektrode (3) ist.

3. Verfahren nach einem der vorhergehenden Ansprüche, bei dem der Offsetspannungswert mindestens gleich 20 mV $\pm$ 5 mV ist.

4. Verfahren nach einem der vorhergehenden Ansprüche, bei dem das Potential der Referenzelektrode (3) geprüft wird, und die Drift des Potentials der Referenzelektrode (3) periodisch erfasst wird, insbesondere in Abhängigkeit von einer Zeitperiode, die nach der letzten Funktionalisierung abgelaufen ist.

5. Verfahren nach einem der vorhergehenden Ansprüche, bei dem das Potential der Referenzelektrode (3) während einer Relaxationsperiode des elektrochemischen Systems nach einer vollständigen Auflading geprüft wird.

6. Verfahren nach einem der vorhergehenden Ansprüche, bei dem die Referenzelektrode (3) rekalibriert wird, wobei die folgenden Schritte durchgeführt werden:

   Anlegen eines Rekalibrierungsstroms mit negativer Amplitude bis zu einer ersten Potentialänderung, dann
   Speichern des erhaltenen Potentialwerts als untere Klemme, dann
   Anlegen eines Rekalibrierungsstroms mit positiver Amplitude bis zu einer zweiten Potentialänderung, dann
   Speichern des erhaltenen Potentialwerts als obere Klemme, dann
   Anschließendes Bestimmen der Kapazität der Referenzelektrode (3) in Abhängigkeit von der unteren Potentialklemme, der oberen Potentialklemme und dem angelegten Strom, dann

Bestimmen des Alterungszustands der Referenzelektrode (3) in Bezug auf ihre Ausgangskapazität und die bestimmte Kapazität,

wenn der Alterungszustand unter einer Grenze liegt, Anlegen eines negativen Stroms, um einen Ladezustand zu erhalten, und

wenn dies nicht der Fall ist, Deklarieren der Referenzelektrode (3) als fehlerhaft.

**7.** Verfahren nach Anspruch 6, bei dem das Produkt der Amplitude der Rekalibrierungsströme mal die Dauer des Anlegens der Rekalibrierungsströme größer als das Fünftel der Gesamtlast der Referenzelektrode (3) ist.

**Claims**

**1.** Method for recalibrating in situ a comparison electrode (3) integrated into an electrochemical system comprising a working electrode (1), a counter electrode (2) and an electrolyte (4), **characterized in that** it comprises the following steps:

the potential of the comparison electrode (3) relative to the working electrode (1) or to the counter electrode (2) is verified in situ by applying the following steps:

the potential of the comparison electrode (3) is measured; then

a verification current of positive amplitude is applied for a first duration; then

a first variation in the potential of the comparison electrode (3) is measured; then

a verification current of negative amplitude is applied for a second duration; then

a second variation in the potential of the comparison electrode (3) is measured; then

a voltage measurement is determined depending on the first variation and the second variation in potential; then

it is determined that there exists a drift in the potential of the comparison electrode (3) relative to the potential plateau for which it was functionalized or designed if the measured voltage is higher than the plateau voltage increased, for a given temperature, by a shift voltage value; and

if such is the case, the comparison electrode (3) is recalibrated in situ by applying in succession a recalibration current of positive amplitude then a recalibration current of negative amplitude in order to reposition the potential of the comparison electrode (3) on the potential plateau.

**2.** Method according to Claim 1, wherein the product of the amplitude of the verification currents multiplied by the respective durations is at least equal to one tenth of the maximum charge of the comparison electrode (3) and at most equal to the maximum charge of the comparison electrode (3).

**3.** Method according to any one of the preceding claims, wherein the shift voltage volume is at least equal to 20 mV $\pm 5$ mV.

**4.** Method according to one of the preceding claims, wherein the potential of the comparison electrode (3) is verified and drift in the potential of the comparison electrode (3) detected periodically, especially depending on the time period that has passed since the last functionalization.

**5.** Method according to one of the preceding claims, wherein the potential of the comparison electrode (3) is verified during a period of relaxation of the electrochemical system consecutive to a complete recharge.

**6.** Method according to one of the preceding claims, wherein the comparison electrode (3) is recalibrated by carrying out the following steps :

a recalibration current of negative amplitude is applied until a first variation in potential; then

the potential value obtained is memorized by way of lower bound; then

a recalibration current of positive amplitude is applied, until a second variation in potential; then

the potential value obtained is memorized by way of upper bound; then

the capacity of the comparison electrode (3) is next determined depending on the lower potential bound, on the upper potential bound and on the applied current; then

the state of ageing of the comparison electrode (3) is determined from its initial capacity and the determined capacity;

if the state of ageing is below a threshold, a negative current is applied in order to obtain a state of charge; and

if such is not the case, the comparison electrode (3) is declared to have failed.

**7.** Method according to Claim 6, wherein the product of the amplitude of the recalibration currents multiplied by the duration of application of the recalibration currents is higher than one fifth of the total charge of the comparison electrode (3).

# FIG.1a

$$\Delta U = (U+) - (U-)$$

(U+)/Ref         (U-)/Ref

V      V

e-             e-

3

+                    -

Ox1   Red1     Red2   Ox2

Electrolyte

O Ion+ O

1        4        2

# FIG.1b

Electrode négative

U+

Ox + xe- ⟶ Red

Potentiel / Ref

État chargé

$$\Delta U = (U+) - (U-)$$

État déchargé

Red ⟶ Ox + xe-

U-

Electrode négative

Temps

# FIG.2

# FIG.3

# FIG.4

EP 3 072 179 B1

# FIG.5

# FIG.6

## RÉFÉRENCES CITÉES DANS LA DESCRIPTION

**Documents brevets cités dans la description**

- US 20090104510 A1
- JP 2010218900 B

- US 2009104510 A